# EUROPÄISCHE PATENTSCHRIFT

(11) **EP 1 002 372 B1**
(45) Veröffentlichungstag und Bekanntmachung des Hinweises auf die Patenterteilung: **07.08.2002**
(21) Anmeldenummer: 98928119.1
(22) Anmeldetag: 03.04.1998
(51) Int. Cl.: H04B 1/08, B60R 11/02

(54) **AUTORADIO MIT EINER FERNBEDIENUNG**
REMOTE CONTROL AUTO RADIO
AUTORADIO A TELECOMMANDE

(30) Priorität: 13.08.1997 DE 19734988
(43) Veröffentlichungstag der Anmeldung: 24.05.2000
(73) Patentinhaber: ROBERT BOSCH GMBH, 70442 Stuttgart (DE)
(72) Erfinder: WIETZKE, Joachim, D-31141 Hildesheim (DE); GROEGER, Klaus-Erwin, D-31199 Diekholzen (DE)
(86) Internationale Anmeldenummer: DE9800939
(87) Internationale Veröffentlichungsnummer: WO9909662

(56) Entgegenhaltungen:
- EP-A- 0 108 270
- EP-A- 0 329 513
- GB-A- 2 116 800

## Beschreibung

Die Erfindung betrifft ein Autoradio mit einer Fernbedienung mit einem Sender für Fernbedienungssignale, wobei das Autoradio mit einer Empfangseinrichtung für Fernbedienungssignale ausgestattet ist und zur Steuerung seiner Funktion eine in einen Einführungsschlitz einführbare Chipkarte aufweist.

Es besteht ein zunehmendes Bedürfnis, auch Autoradios mit einer Fernbedienung zu bedienen. Durch eine Fernbedienung kann das Autoradio beispielsweise auch von den Rücksitzen aus eingestellt werden, also beispielsweise ein neuer Sender gesucht oder die Lautstärke reguliert werden. Sicherheitstechnisch ist eine Fernbedienung vorteilhaft, wenn der Fernbedienungsgeber am Lenkrad montiert wird, so daß das Autoradio bedienbar wird, ohne daß der Fahrer die Hände vom Lenkrad nehmen muß.

Allerdings erlaubt der Mehrpreis für eine Fernbedienung des Autoradios nicht, daß die Autoradios serienmäßig mit einer Fernbedienung ausgerüstet werden. Es ist deshalb zweckmäßig, die Autoradios für eine Fernbedienung nachrüstbar auszugestalten.

Hierfür ist es bekannt, am Autoradio eine Schnittstelle vorzusehen, über die ein Fernbedienungsempfänger als Zusatzbox am Autoradio befestigt und mit ihm verbunden werden kann. Durch die Anbringung der Zusatzbox ist ein nicht unerheblicher Einbauaufwand erforderlich, da der Einbau im allgemeinen durch Fachkräfte erfolgen muß.

Da Autoradios regelmäßig mit zahlreichen Zusatzfeatures (RDS-Empfang, separater Verkehrsfunkkanal, Kassettenlaufwerk, CD-Laufwerk) ausgestattet sind und daher häufig einen nicht unerheblichen Wert repräsentieren, wird versucht, dem Diebstahl von Autoradios zu begegnen, indem die Autoradios für Diebe unbrauchbar sind. Dies kann dadurch geschehen, daß das Autoradio nur bedienbar ist, wenn ein eingegebener Code eingetippt wird. Es ist auch bekannt, das Autoradio nur benutzbar zu machen, wenn eine zum Autoradio gehörende Chipkarte als "Keycard" in das Gerät eingeschoben wird. Auf der Keycard ist ein ggf. aufwendiger Code gespeichert, der mit einem im Gerät abgespeicherten Code identisch ist, so daß das Autoradio ohne Keycard nicht benutzbar ist.

Der Erfindung liegt die Problemstellung zugrunde, den Aufwand für eine nachrüstbare Fernbedienung eines Autoradios zu reduzieren, um dadurch die Akzeptanz für nachrüstbare Fernbedienungen zu erhöhen.

Zur Lösung dieses Problems ist erfindungsgemäß ein Autoradio der eingangs erwähnten Art dadurch gekennzeichnet, daß die Chipkarte mit der Empfangseinrichtung für die Fernbedienungssignale versehen ist und über ihre Kontaktierung mit der Steuerung des Autoradios verbunden ist, mit der die durch die Fernbedienungssignale angesprochenen Steuerungsfunktionen ausführbar sind.

Die erfindungsgemäße Ausbildung der Fernbedienung des Autoradios erfordert überhaupt keinen Einbauaufwand am Autoradio, da die Einkopplung der über die Empfangseinrichtung der Chipkarte empfangenen Fernbedienungssignale in das Autoradio über die Kontaktflächen der Chipkarte und die entsprechenden Kontakte des Autoradios erfolgt. Die Erstellung einer Chipkarte mit einer Empfangseinrichtung für Fernbedienungssignale, beispielsweise Infrarot-Empfangsdioden, ist unproblematisch, wenn die Chipkarte immer etwas aus dem Einschubschlitz herausragt und die Empfangseinrichtung im herausragenden Bereich der eingeschobenen Chipkarte angeordnet sein kann. Auf diese Weise gelingt es, die für eine Infrarot-Fernbedienung im allgemeinen erforderliche Sichtverbindung zwischen Geber und Empfänger zu realisieren.

Vorzugsweise wird die Chipkarte ferner einen integrierten Verstärker und zweckmäßigerweise einen Filter für die empfangenen Fernbedienungssignale aufweisen, damit eine Verstärkung der empfangenen Fernbedienungssignale zur Erhöhung der Bediensicherheit unmittelbar im Anschluß an den Empfang stattfinden kann, um die Gefahr von Signalverfälschungen durch Störungen auf dem Übertragungsweg in das Autoradio zu vermindern.

Es ist auch denkbar, die Chipkarte mit einem Decoder für die empfangenen Fernbedienungssignale und ggf. mit einem Mikroprozessor zur Erstellung der Steuersignale für das Autoradio zu versehen. Hierdurch wird der Hardwareaufwand für die Vorbereitung des Autoradios für eine Nachrüstung einer Fernbedienung weiter verringert. Da der Kostenfaktor für einen Decoder jedoch nicht sehr hoch ist und die Funktion des Mikroprozessors für die Verarbeitung der Fernbedienungssignale regelmäßig durch eine entsprechende Programmierung eines vorhandenen Mikroprozessors erledigt werden kann, ist es in erster Linie eine wirtschaftliche Überlegung, ob die Chipkarte mit dem Decoder und/oder dem Mikroprozessor oder ohne diese Bauelemente ausgestattet wird.

Für Autoradios, die mit einer Schlüsselkarte (Keycard) gesichert sind, ist es besonders vorteilhaft, wenn die für die Fernbedienung vorgesehene Chipkarte als eine mit Hilfe einer Stamm-Schlüsselkarte programmierbare Zweit-Schlüsselkarte ausgebildet ist. Hierfür ist die Chipkarte mit einem Speicher oder Mikroprozessor versehen. In diesem Fall kann die für die Fernbedienung vorgesehene Chipkarte die Funktion der Keycard mitübernehmen, so daß die Notwendigkeit einer Handhabung von zwei Chipkarten vermieden wird. In ähnlicher Weise kann die Chipkarte auch für andere multifunktionale Anwendungen durch einen geeigneten Mikroprozessor ausgebildet sein.

Die Erfindung soll im folgenden anhand eines in der Zeichnung dargestellten Ausführungsbeispiels näher erläutert werden. Es zeigen:
- Figur 1 -: eine schematische Ansicht der Front eines Autoradios mit einer in das Autoradio einschiebbaren Chipkarte
- Figur 2 -: ein Prinzipschaltbild für den elektronischen Aufbau der Chipkarte.

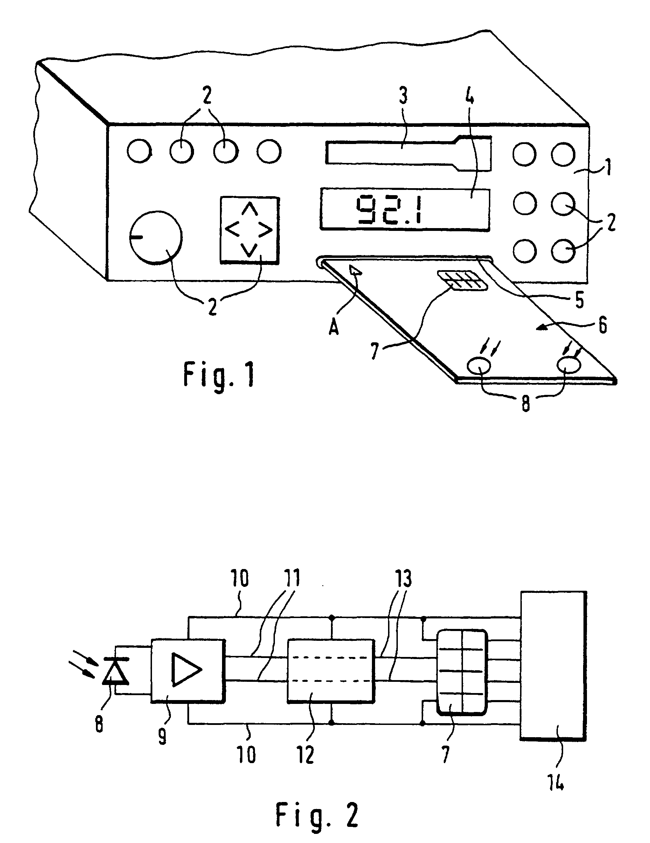

Figur 1 läßt eine Frontplatte 1 eines Autoradios erkennen, die in üblicher Weise mit einer Vielzahl von Einstellelementen 2, einem Kassettenschacht 3 und einem Displayfeld 4 versehen ist. Ferner ist ein Einschubschlitz 5 für eine Chipkarte 6 vorgesehen, die in Richtung des dargestellten Pfeils A in das Autoradio einschiebbar ist. Auf der Chipkarte 6 ist ein Kontaktfeld 7 erkennbar, mit dem die Chipkarte über entsprechende Gegenkontakte innerhalb des Autoradios mit dem Autoradio kontaktierbar ist. An der vorderen Kante der Chipkarte 6 sind in dem dargestellten Ausführungsbeispiel zwei Empfangsdioden 8 dargestellt, die beispielsweise für Infrarotstrahlung empfindlich sein können, die von einem (nicht dargestellten) Fernbedienungsgeber aus codierte Steuerinformationen für die Einstellung des Autoradios enthält. Die Anbringung der Empfangsdioden 8 an der vorderen Kante der Chipkarte 6 hat zur Folge, daß die Empfangsdioden 8 auch bei zur Kontaktierung eingeschobener Chipkarte 6 aus dem Einschubschlitz 5 noch vorstehen, so daß eine Sichtverbindung zu den Empfangsdioden 8 gegeben ist, die für eine Infrarot-Fernbedienung erforderlich ist.

Es ist jedoch ohne weiteres klar, daß auf der Chipkarte 6 auch Empfänger für andere Fernbedienungssignale angeordnet sein können, beispielsweise von Funksignalen, die allerdings in einem Frequenzband liegen müssen, mit dem weder der Radioempfang noch ein etwaiger vom Auto aus vorgenommener CB-Funkverkehr gestört wird. Bevorzugt ist daher eine Fernbedienung, die nicht auf der Basis von Funksignalen arbeitet, wie beispielsweise eine Infrarot-Fernbedienung.

Figur 2 zeigt beispielhaft eine funktionale Anordnung der elektronischen Bauelemente auf der Chipkarte 6. An die Empfangsdiode 8, die die Infrarotsignale in elektrische Signale umwandelt, ist ein Verstärker 9 angeschlossen, dem über zwei Leitungen 10 eine Versorgungsspannung zugeleitet wird. Über Signalleitungen 11 ist der Verstärker mit einem Decoder 12 verbunden, dessen Signalausgangsleitungen 13 zu zugeordneten Kontaktflächen des Kontaktfeldes 7 führen. Über das Kontaktfeld 7 werden auch die Leitungen 10 mit der Versorgungsspannung aus dem Autoradio versorgt. An das Kontaktfeld 7 ist ferner ein Mikroprozessor 14 oder Speicher angeschlossen, der speziell für die Sicherungsfunktion des Autoradios ausgebildet ist und/oder multifunktionale Aufgaben erfüllt. Die Verarbeitung der Fernbedienungssignale und Erstellung der entsprechenden Steuersignale für das Autoradio ist im Autoradio in Form eines eigens dafür vorgesehenen µC's oder im Haupt-µC vorgesehen.

Wie bereits erwähnt, kann es durchaus zweckmäßig sein, die Chipkarte 6 ohne Decoder 12 und Mikroprozessor 14 auszubilden, so daß die Chipkarte 6 nur die Empfangsdioden 8 und ggf. den Verstärker 9 aufweist. Der Mikroprozessor 14 bzw. Speicher ist allerdings erforderlich, wenn die Chipkarte 6 auch als Schlüsselkarte einsetzbar sein soll und als 2. Security-Karte die Schlüsselfunktion übernimmt.

Der nur schematisch dargestellte Aufbau der Chipkarte 6 kann in vielfältiger Weise realisiert werden, wobei es auch möglich ist, zusätzliche Halbleiterbauelemente auf der Chipkarte 6 vorzusehen.

## Patentansprüche

1. Autoradio mit einer Fernbedienung mit einem Sender für Fernbedienungssignale, wobei das Autoradio mit einer Empfangseinrichtung (8) für Fernbedienungssignale ausgestattet ist und zur Steuerung seiner Funktion eine in einen Einführungsschlitz (5) einführbare Chipkarte (6) aufweist, **dadurch gekennzeichnet, daß** die Chipkarte (6) mit der Empfangseinrichtung (8) für die Fernbedienungssignale versehen ist und über ihre Kontaktierung (7) mit der Steuerung des Autoradios verbunden ist, mit der die durch die Fernbedienungssignale angesprochenen Steuerungsfunktionen ausführbar sind.

2. Autoradio nach Anspruch 1, **dadurch gekennzeichnet, daß** die Chipkarte (6) einen Verstärker (9) für die empfangenen Fernbedienungssignale aufweist.

3. Autoradio nach Anspruch 1 oder 2, **dadurch gekennzeichnet, daß** die Chipkarte (6) einen Decoder (12) für die empfangenen Fernbedienungssignale aufweist.

4. Autoradio nach Anspruch 3, **dadurch gekennzeichnet, daß** die Chipkarte (6) einen Mikroprozessor (14) zur Erstellung von Steuersignalen entsprechend den empfangenen Fernbedienungssignalen aufweist.

5. Autoradio nach einem der Ansprüche 1 bis 4, **dadurch gekennzeichnet, daß** die Chipkarte (6) als eine mit Hilfe einer Stamm-Schlüsselkarte programmierbare Zweit-Schlüsselkarte ausgebildet ist.

6. Autoradio nach einem der Ansprüche 1 bis 5, **dadurch gekennzeichnet, daß** die Empfangseinrichtung Infrarot-Empfangsdioden (8) aufweist.

## Claims

1. Car radio having a remote control with a transmitter for remote control signals, with the car radio being equipped with a receiving device (8) for remote control signals and, in order to control its function, having a smart card (6) which can be inserted into an insertion slot (5), **characterized in that** the smart card (6) is provided with the receiving device (8) for the remote control signals and is connected to the car radio controller via its contact (7), by means of which controller the control functions which are addressed by the remote control signals can be carried out.

2. Car radio according to Claim 1, **characterized in that** the smart card (6) has an amplifier (9) for the received remote control signals.

3. Car radio according to Claim 1 or 2, **characterized in that** the smart card (6) has a decoder (12) for the received remote control signals.

4. Car radio according to Claim 3, **characterized in that** the smart card (6) has a microprocessor (14) for producing control signals corresponding to the received remote control signals.

5. Car radio according to one of Claims 1 to 4, **characterized in that** the smart card (6) is in the form of a second key card which can be programmed by means of a master key card.

6. Car radio according to one of Claims 1 to 5, **characterized in that** the receiving device has infrared receiving diodes (8).

## Revendications

1. Autoradio à télécommande comportant un émetteur pour les signaux de télécommande, l'autoradio étant équipé d'une installation de réception (8) des signaux de télécommande et d'une carte à puce (6) qui s'introduit dans une fente (5) pour commander le fonctionnement de l'autoradio,
**caractérisé en ce que**
la carte à puce (6) est munie de l'installation de réception (8) des signaux de télécommande et reliée par des contacts (7) à la commande de l'autoradio, pour effectuer les fonctions de commande correspondant aux signaux de télécommande.

2. Autoradio selon la revendication 1,
**caractérisé en ce que**
la carte à puce (6) comporte un amplificateur (9) pour les signaux de télécommande reçus.

3. Autoradio selon la revendication 1 ou 2,
**caractérisé en ce que**
la carte à puce (6) comporte un décodeur (12) pour les signaux de télécommande reçus.

4. Autoradio selon la revendication 3,
**caractérisé** ce que
la carte à puce (6) comporte un microprocesseur (14) pour générer les signaux de commande correspondant aux signaux de télécommande reçus.

5. Autoradio selon l'une des revendications 1 à 4,
**caractérisé en ce que**
la carte à puce (6) est une seconde carte à clé, programmée à l'aide de la carte à clé mère.

6. Autoradio selon l'une des revendications 1 à 5,
**caractérisé en ce que**
l'installation de réception comporte des diodes de réception (8) infrarouges.
